# EUROPEAN PATENT SPECIFICATION

(11) **EP 0 500 505 B1**
(45) Date of publication and mention of the grant of the patent: **10.05.1995**
(21) Application number: 92830059.9
(22) Date of filing: 10.02.1992
(51) Int. Cl.: B01D 61/50, C25B 9/00

(54) **Equipment for electrolysis and electrodialysis**
Einrichtung für die Elektrolyse und die Elektrodialyse
Appareil pour l'électrolyse et électrodialyse

(30) Priority: 11.02.1991 IT MI910339
(43) Date of publication of application: 26.08.1992
(73) Proprietor: SESPI S.r.l., Milano (IT)
(72) Inventor: Righetti, Gianmaria, Milano (IT)
(74) Representative: Adorno, Silvano

(56) References cited:
- EP-A- 0 064 417
- EP-A- 0 158 760
- EP-A- 0 220 659

## Description

The invention relates to an equipment for electrolysis and electrodialysis having the filter-press structure of the type disclosed e.g. in EP-A-0064417 and EP-A-0158760, and which is suitable for both monopolar and bipolar systems to accomplish several electro-chemical processes.

The requirement for such an equipment raised from the market since many years ago and particularly for an equipment formed by one or more electrolytic cells (monopolar or bipolar electrolyzers) characterized by high production capacity and reduced dimensions.
The realization of such equipment is presently favorized by the following factors:
- availability of ion exchange membranes, both of cationic and anionic type
- availability of new materials for the electrodes and for other cell components, such as frames, gaskets etc.

The aim which is intended to be reached, in general, is to reduce the construction costs and the power consumption so to render economically convenient - to obtain a given product - the electrochemical process in alternative to a traditional chemical process.

The equipments available so far have shown various inconveniences for the shape of the electrodes, for the difficulties in assembling the membranes to the separator elements and for the connections of electrodes to frames.
Above inconveniences therefore result in:
- irregularity of the current distribution between the electrodes;
- defective anchoring of the membranes With subsequent damaging of same;
- complications and difficulties for the construction and assembly of frames to electrodes;
- impossibility of an easy conversion from a monopolar electrolyzer to a bipolar one.

It is the object of the invention to eliminate these inconveniences by rendering available an equipment showing the above-mentioned advantages.

Such an object is obtained by an equipment having the features of claim 1 and, in particular preferred embodiments thereof, also the features described in one or more of the sub-claims.

The equipment according to the invention will be now described more in detail with reference to the following description given by way of non-limiting example with reference to the drawings in which:
**Figs. 1 and 2** represent the horizontal section of the filter-press respectively for monopolar and bipolar systems;
**Fig 3** represents the view of half-electrode from direction of arrows A in figs. 1 and 2;
**Fig. 4** represents the section from the top of the half-electrode of fig. 3;
**Fig. 5** is an elevated view of a frame from direction of arrows A in figs. 1 and 2;
**Fig. 6** is a section of fig. 5 as per line VI-VI.
**Fig. 7** is an elevated view of an intermediate frame from arrows A in figs. 1 and 2;
**Fig. 8** is a section of the frame as per line VIII-VIII of fig. 7;
**Fig. 9** is a section of a detail as per line IX-IX of fig. 7;
**Fig. 10** is a partial view od an intermediate frame modified with reference to the intermediate frame of fig. 7;
**Fig. 11** represents the section of detail as per line XI-XI of fig. 10; and
**Fig. 12** represents a magnified detail of fig. 6.
With reference to fig. 1, representing a monopolar system and to fig. 2 representing a bipolar system of the equipment under consideration, it is very easy to note that in both cases the electrodes 1 are of identical shape and each one is formed by two half-electrodes 2.

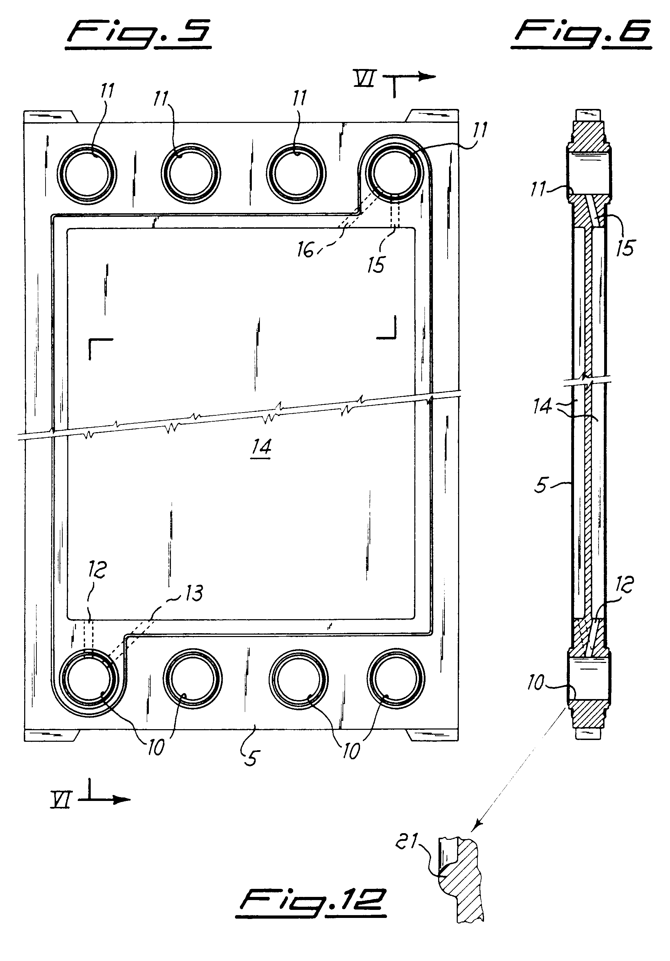

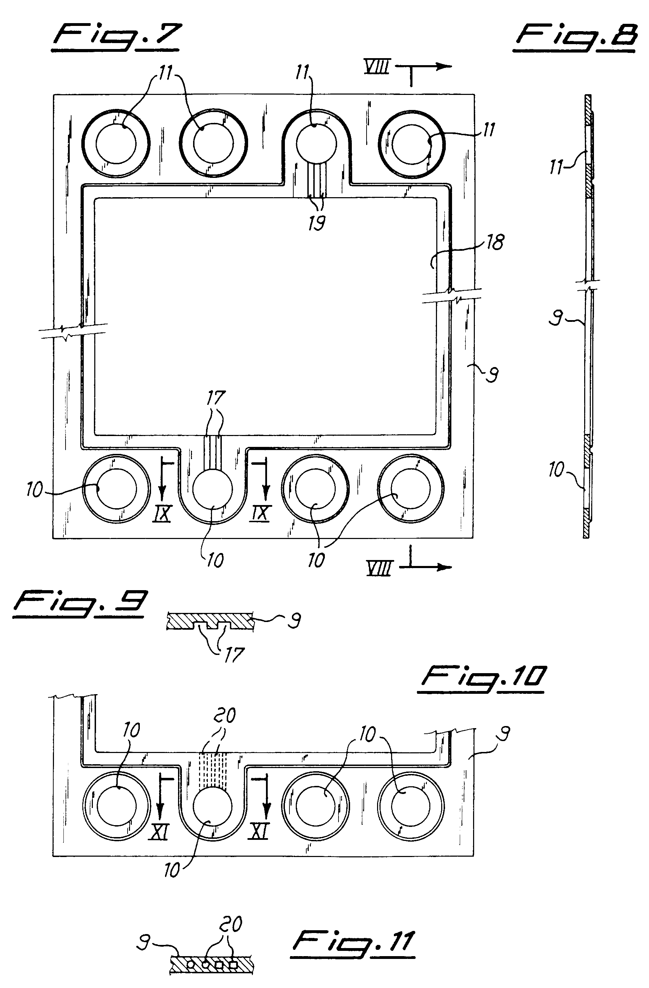

From fig.3 and 4 it is noticed that each half-electrode consists of a bended sheet with holes 3 in its central position.

The half-electrodes 2 are joined together at one end 4, for instance by means of bolts, and at the internal part of each electrode 1 one frame 5 is enclosed so that the ends 4 of the electrodes remains outside the evidenced frames 5.

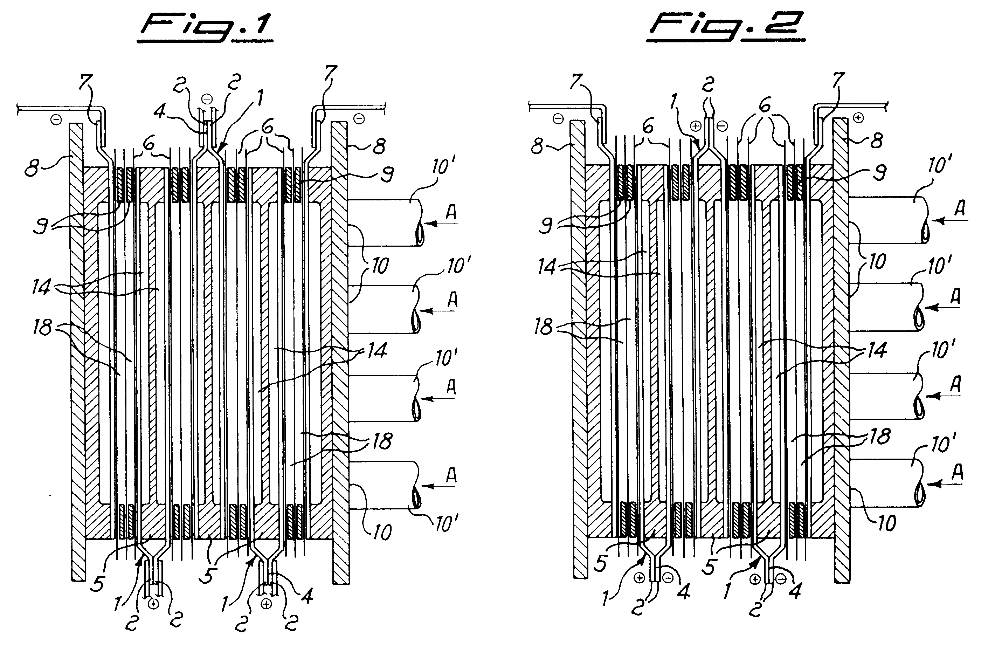

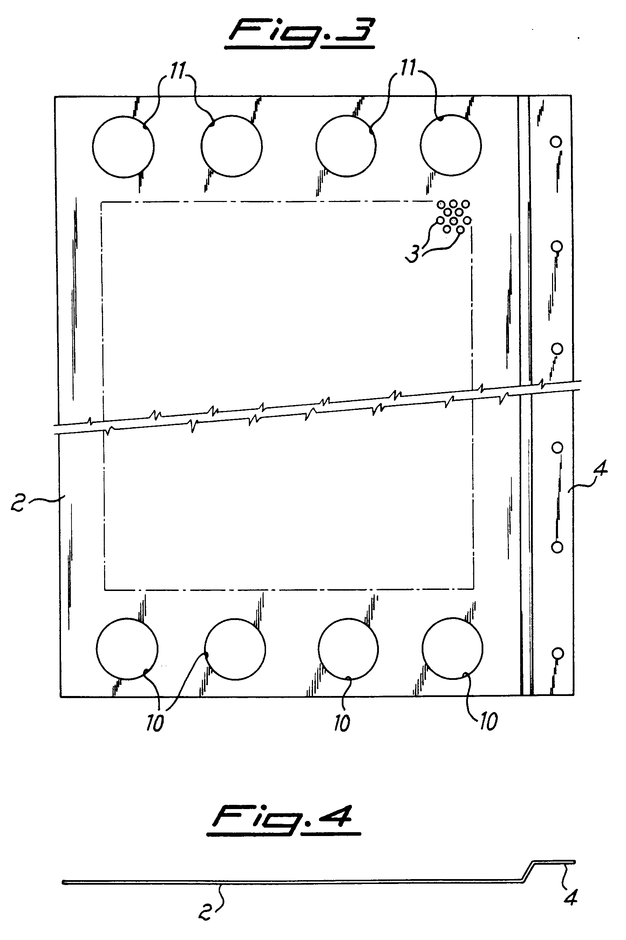

The ends 4 can be arranged horizontally instead of vertically as indicated in fig.1 and 2. Their span can also be adjusted.

Between the two half-electrodes of adiacent electrodes there are separators or membrane 6 placed in such a way that their perimeters match the perimeter of frames 5.

Suitable end half-electrodes 7 are provided adiacent to end frames 8.

The various elements described form one electrolyzer filter-press shaped in which the various elements are pressed together by means of an axial-thrust system mechanically or hydraulically operated.

Intermediate frames 9 are also provided, placed between two half-electrodes of adiacent electrodes. These also are equipped with interposed membranes 6.

With these intermediates frames the equipment under reference, named electrodialyzer, is suitable for the electrodialysis.

As it can be noticed from fig.1, the monopolar set-up is identified by the specific polarity of the applied current, in which the positive polarity is applied at the ends 4 of electrodes 1 placed at one side. The negative polarity si applied at the other ends 4 and 7 in the reversed set-up of above mentioned electrodes.

While in the bipolar set-up, as it can be noticed from fig.2, the negative and positive polarities are applied only to the end half-electrodes 7.

The various figures show that the electrodes 1, the frames 5 and the intermediate frames 9 are equipped with fluid inlet holes 10 as per arrows A and with outlet holes 11.

In fig.5 and 6, specifically, are represented the ducts 12 and 13 connecting the holes 10 with the half-cells 14.

In the same fig.5 and 6 the ducts 15 and 16 are also shown as connecting above half cells 14 and the outlet holes 11.

In fig.7, 8, 9 it is noticed how the growings 17 connect the holes 10 of the intermediate frames 9 with the openings 18 and how corresponding growings 19 connect above mentioned openings 18 with outlet holes 11.

Similary, in the variant indicated at fig.10 and 11, the ducts 20 connect the holes 10 with the opening 18 of above mentioned intermediate frames 9.

Above openings 18 form chambers limited by membrane 6 hold back by the intermediate frames in the case of electrodialyzer operation.

In this case the fluids fed through the holes 10 of ducts 10′ enters the half-cells 14 and chambers 18 through the holes 3 of electrodes 1, the ducts 12 and 13 of frames 5, growing 17 or ducts 20 of intermediate frames 9.

The same fluids leave the unit through holes 11, holes 3 of electrodes 1, ducts 15 and 16 of frames 5 and through the growing 19 of intermediate frame 9.

The following are important aspects and characteristics of the equipment which must be carefully taken into consideration:
The surface of the electrode 1 to be used as electrical contact can be copper, silver or nichel plated so that electrodes 1 are built up by bolting the two half electrodes 2 at the end 4 thus forming a bivalent electrode.

The raw materials for the construction of the electrodes vary in connection with the specific process they will be used for and they may also be fabricated with titanium, nichel, zirconium, tantalium, or niobium.

The active surfaces of the electrodes are in general coated with linings having specific electrocatalytic and conductivity characteristics. These coatings are formed by one or more metals or metal oxides as, for instance, platinum, rhodium, iridium, ruthenium, osmium or palladium.

As here above noticed, the separator elements used for the equipment under reference, forming the half cells, anodic and catodic compartments-and eventually intermediate compartments in the electrodialyzers case-consist preferably of ionoselective membranes 6 which enable the conveying of cathions or anions from a cell compartment to another one.

It must be noticed, furthermore, that there are electrochemical process which do not require any partition between anodic and cathodic compartments.

In this case the equipment can easily be adapted to the new process, by replacing the separator elements of the anodic and cathodic chambers by as many frames as necessary having thickness equivalent to the required interelectrodic distance.

The frames 5 are fabricated in a non conductive material in accordance to the type of expected service. They may be fabricated in PVDF, PP, PVCC, etc.

For several electrodialysis processes, two specific families of thermoplastic materials can be advantageously used: polyester elastomers and olefinic elastomers, these last obtained by mixing EPM or EPDM rubbers with polypropilene.

The mechanical characteristics and the elasticity of above materials enable the elimination of the sealing gaskets.

The protruding tang 21 around the holes 10 and 11 of frames 5 is perfectly convenient to realize the above mentioned sealing.

The frames fabricated with thermoplastic elastomers are obtained according to normal procedures such as injection molding, but they may also be fabricated from extruded sheets, by mechanical machining.

On the basis of the above considerations, the advantages of the equipment connected to the present invention becomes outstanding.

One of the most significant advantages to be noticed is the configuration filter-press of the equipment, provided with compact and semplified electrodic geometric enabling the utilisation of the equipment on both monopolar and bipolar systems in several electrochemical operations.

A further advantage consist in the configuration and arrangement of the bivalent electrodes as evidenced in fig. 1 and 2 which indicate the uniformity of the current flow between two side electrodes, thanks to their alternate arrangement, i.e. with the connecting ends alternatively at one end and at the opposite one of the filter-press configuration.

The above arrangement confirms also that the current run is equivalent for both monopolar and bipolar arrangements.

The specific geometry of these electrodes enables an easy disassembling to reestablish, periodically, the electrocatalytic coatings.

An additional peculiar advantage consists in the fact that being the electrode sheets bended outside the frames, the separator elements or membranes, stays on electrodes perfectly flat so remaining fully supported.

This fact avoids endomaging of membranes in the zone included between the internal perimeter of the frames and the external perimeter of the electrodes.

It is to be noted that the monopolar and bipolar elements as described are manufactured without weldings.

## Claims

1. Equipment to be used for the electrolysis and electrodialysis of fluids, comprising anodic and cathodic electrodes (1) supported by frames (5) and assembled in a known filterpress-type configuration, characterized in that the electrodes (1) are suitable for both monopolar and bipolar systems, each one being formed by two half-electrodes (2) connected at one end only (4), spaced by said frames (5), each frame (5) being interposed between each pair of half-electrodes (2), whereby the connected ends (4) of said electrodes (1) are alternatively at one side and then at the opposite side of the mentioned filter-press configuration.

2. An equipment for the electrolysis and electrodialys is according to claim 1, characterized in that each couple of half-electrodes (2) forms one electrode (1) with above mentioned junction ends (4) externally to the mentioned frames (5).

3. An equipment for the electrolysis and electrodialysis according to claims 1 and 2, characterized in that a membrane (6) is foreseen to be interposed between two half-electrodes (2) of two adjacent electrodes (1) and that the perimeter of the membranes matches the perimeter of frames (5) inside the electrodes (1).

4. An equipment for the electrolysis and electrodialysis according to claim 1, characterized in that, in case of the electrodialysis, one or more intermediate frames (9) are arranged between two half-electrodes (2) of two adiacent electrodes (1).

5. Equipment for the electrolysis and electrodialysis as per claim 4, **characterized in** that the membranes (6) are arranged between the intermediate frames (9) and between these same and the half-electrodes (2) of adjacent electrodes (1).

6. Equipment for electrolysis and electrodialysis as per above claims, **characterized in** that the frames (5) have elastic properties so that they do not require gaskets for fluids sealing.

7. Equipment for electrolysis and electrodialysis as per claim 6, **characterized in** that the frames (5) can be obtained either by press moulding or by machining of extruded sheets.

8. Equipment for electrolysis and electrodialysis as per claim 1, **characterized in** that it is possible to switch from monopolar configuration to the bipolar one, without modifying the equipment components but by only modifying the arrangement of the electrical connections.

## Patentansprüche

1. Einrichtung für die Elektrolyse und Elektrodialyse von Fluiden, mit anodischen und kathodischen Elektroden (1), die durch Rahmen (5) getragen werden und nach Art einer bekannten Filterpresse angeordnet sind, dadurch **gekennzeichnet**, daß die Elektroden (1) sowohl für monopolare als auch für bipolare Systeme geeignet sind, daß sie jeweils durch zwei Halbelektroden (2) gebildet werden, die nur an einem Ende (4) verbunden sind und durch die Rahmen (5) in Abstand gehalten werden, wobei jeder der Rahmen (5) jeweils zwischen einem Paar der Halbelektroden (2) liegt, so daß die verbundenen Enden (4) der Elektroden (1) alternativ auf der einen und sodann auf der gegenüberliegenden Seite der erwähnten Filterpressen-Konfiguration liegen.

2. Einrichtung für die Elektrolyse und Elektrodialyse gemäß Anspruch 1, dadurch **gekennzeichnet**, daß jedes Paar der Halbelektroden (2) eine Elektrode (1) mit den oben erwähnten Verbindungsenden (4) außerhalb der erwähnten Rahmen (5) bildet.

3. Einrichtung für die Elektrolyse und Elektrodialyse gemäß Anspruch 1 und 2, dadurch **gekennzeichnet**, daß eine Membran (6) zwischen zwei Halbelektroden (2) zweier benachbarter Elektroden (1) vorgesehen ist, und daß der Umfang der Membran mit dem Umfang der Rahmen (5) innerhalb der Elektroden (1) übereinstimmt.

4. Einrichtung für die Elektrolyse und Elektrodialyse gemäß Anspruch 1, dadurch **gekennzeichnet**, daß im Falle der Elektrodialyse ein oder mehrere Zwischenrahmen (9) zwischen den beiden Halbelektroden (2) zweier benachbarter Elektroden (1) vorgesehen sind.

5. Einrichtung für die Elektrolyse und Elektrodialyse gemäß Anspruch 4, dadurch **gekennzeichnet**, daß die Membranen (6) zwischen den Zwischenrahmen (9) und zwischen diesen und den Halbelektroden (2) benachbarter Elektroden (1) angeordnet sind.

6. Einrichtung zur Elektrolyse und Elektrodialyse gemäß den obigen Ansprüchen, dadurch **gekennzeichnet**, daß die Rahmen (5) elastische Eigenschaften aufweisen, so daß sie keine Dichtungen zur Fluidabdichtung erfordern.

7. Einrichtung für die Elektrolyse und Elektrodialyse gemäß Anspruch 6, dadurch **gekennzeichnet**, daß die Rahmen (5) hergestellt werden können durch Pressen oder durch Bearbeiten extrudierter Platten.

8. Einrichtung für die Elektrolyse und Elektrodialyse nach Anspruch 1, dadurch **gekennzeichnet**, daß es möglich ist, von einer monopolaren Konfiguration auf eine bipolare umzuschalten, ohne die Komponenten der Einrichtung zu modifizierten, indem lediglich die Anordnung der elektrischen Verbindungen modifiziert wird.

## Revendications

1. Equipement pour l'électrolyse et l'électrodialyse de fluides, comprenant des électrodes anodique et cathodique (1) portées par des cadres (5) et assemblées dans une configuration connue du type presse de filtrage, caractérisé en ce que les électrodes (1) conviennent aussi bien aux systèmes monopolaires qu'aux systèmes bipolaires, en étant chacune formées de deux demi-électrodes (2) connectées à une seule (4) de leurs extrémités, portées par les cadres (5), chacun de ceux-ci étant interposé entre chaque paire de demi-électrodes (2), les extrémités connectées (4) étant disposées alternativement d'un côté de la configuration en presse de filtrage mentionnée puis du côté opposé.

2. Equipement pour l'électrolyse et l'électrodialyse de fluides selon la revendication 1, caractérisé en ce que chaque paire de demi-électrodes (2) constitue une seule électrode (1) avec les extrémités connectées (4) disposées à l'extérieur des cadres (5).

3. Equipement pour l'électrolyse et l'électrodialyse de fluides selon les revendications 1 et 2, caractérisé en ce qu'il est prévu une membrane (6) interposée entre deux demi-électrodes (2) de deux électrodes (1) adjacentes et en ce que le périmètre des membranes correspond su périmètre des cadres (5) à l'intérieur des électrodes (1).

4. Equipement pour l'électrolyse et l'électrodialyse des fluides selon la revendication 1, caractérisé en ce que, dans le cas de l'électrodialyse, un ou plusieurs cadres intermédiaires (9) sont disposés entre deux demi-électrodes (2) de deux électrodes adjacentes (1).

5. Equipement pour l'électrolyse et l'électrodialyse de fluides selon la revendication 4, caractérisé en ce que les membranes (6) sont disposées entre les cadres intermédiaires (9) et entre ceux-ci et les demi-électrodes (2) des électrodes adjacentes (1).

6. Equipement pour l'électrolyse et l'électrodialyse de fluides selon l'une quelconque des revendications ci-dessus, caractérisé en ce que les cadres (5) ont des propriétés élastiques de sorte qu'ils ne nécessitent pas de joints pour assurer l'étanchéité aux fluides.

7. Equipement pour l'électrolyse et l'électrodialyse de fluides selon la revendication 6, caractérisé en ce que les cadres (5) peuvent être obtenus soit par moulage sous pression, soit par usinage de feuilles extrudées.

8. Equipement pour l'électrolyse et l'électrodialyse de fluides selon la revendication 1, caractérisé en ce qu'il est possible de transformer une configuration monopolaire en une configuration bipolaire sans modifier la disposition des connexions électriques.
